# EUROPEAN PATENT APPLICATION

(11) **EP 1 808 624 A1**
(43) Date of publication of application: **18.07.2007**
(21) Application number: 06003991.4
(22) Date of filing: 27.02.2006
(51) Int. Cl.: F16K 21/02, F16K 15/02

(54) **Pressure valve**

(30) Priority: 16.01.2006 KR 2006004372
(71) Applicant: Joo, Hong-Sung, Yeongtong-gu Suwon, Gyeonggi-do (KR)
(72) Inventor: Ko, Jae-Seok, Kwonseon-gu, Suwon, Gyeonggi-do (KR); Joo, Hong-Sung, Gyeonggi-do (KR)
(74) Representative: Kuhnen & Wacker

(57) **Abstract**

A pressure valve includes first and second casings (100,200) separably coupled to each other, first and second casings respectively having a fluid inflow passage (130) and a fluid outflow fluid passage (230) communicating with each other and a movable unit (50) inserted in the fluid inflow passage, the movable unit being movable by pressure of inflow fluid and allowing fluid to flow between the movable unit and the fluid inflow passage. A start portion of the fluid outflow passage (230) of the second casing (200) is provided with a receiving portion (220) for receiving an end portion (54) of the movable unit (50). A gap is formed between the end portion of the movable unit and the receiving portion.

## Description

### BACKGROUND ART

### Field of the Invention

The present invention relates to a pressure valve, and more particularly, to a pressure valve that can uniformly vary a flow rate of outflow fluid in response to a pressure variation of inflow fluid.

### Description of the Related Art

There are variety of fields such as a field of a machine, filter and the like that are industrial components utilizing fluid, a field of a biotechnology relating to a blood pressure, and the like where a predetermined amount of fluid must continuously vary and circulate in response to a pressure variation of fluid. Therefore, there is a need for a pressure valve that can be reliably and effectively applied to each field.

Particularly, there is a need for a pressure valve that can uniformly vary a flow rate of outflow fluid within a limited range even when a pressure variation of inflow fluid is relatively high.

According to the related art, a pressure valve including first and second casings that are tightly coupled to each other, a movable unit inserted in a fluid passage of the first casing to be movable by fluid pressure, a stationary unit having an orifice and formed in a fluid passage of the second casing, an elastic spring disposed between the movable and stationary units to provide a variable gap between them is proposed in response to the above need.

However, the pressure valve according to the related art has a coupled of problems.

That is, since the stationary unit is independently provided, a special process for manufacturing the stationary unit is required and a process for fixing the stationary unit is further required.

Furthermore, since the elastic spring must be disposed between the movable unit and the stationary unit, the number of working processes and the number of components are increased. Particularly, in order to prevent a gap between the movable unit and the stationary unit from being blocked, the spring coefficient must be accurately set.

### Summary of the Invention

An object of the present invention is to provide a pressure valve that can uniformly vary a flow rate of outflow fluid in response to a pressure variation of inflow fluid.

According to an aspect of the present invention, there is provided a pressure valve including: first and second casings separably coupled to each other, first and second casings respectively having a fluid inflow passage and a fluid outflow fluid passage communicating with each other; and a movable unit inserted in the fluid inflow passage, the movable unit being movable by pressure of inflow fluid and allowing fluid to flow between the movable unit and the fluid inflow passage, wherein a start portion of the fluid outflow passage of the second casing is provided with a receiving portion for receiving an end portion of the movable unit, a gap being formed between the end portion of the movable unit and the receiving portion.

According to this aspect, the flow rate of the outflow fluid can be uniformly varied in response to a pressure variation of the inflow fluid.

Preferably, the movable unit may include a main body on an outer circumference of which a plurality of first grooves are formed in a direction where the fluid flows and a head extending from the main body, the head having an tapered end portion, wherein the tapered end portion is provided with a second groove formed in the direction where the fluid flows.

Therefore, the flow rate of the outflow fluid can be uniformly varied in response to a pressure variation of the inflow fluid.

Preferably, the first and second casings are formed of iron metal or non-iron metal that is less deformed against heat and pressure and the movable unit is formed of polymer material or ceramic material that is superior in heat-resistance, pressure-resistance, frictional-heat-resistance.

According to another aspect of the present invention, there is provided a pressure valve including: a first casing having a fluid inflow passage and a receiving passage communicating with the fluid inflow passage and having a diameter greater than that of the fluid inflow passage; a second casing coupled to the first casing, the second casing having a receiving portion communicating with the receiving passage and a fluid outflow passage communicating with the receiving portion; and a movable unit having a main body on an outer circumference of which at least one groove is formed in a direction where the fluid flows and a head extending from the main body, the head having an tapered end portion, wherein the main body is movably inserted in the receiving passage and the tapered end portion is received in the receiving portion, thereby forming a buffer space enclosed by the movable unit and the first and second casings.

According to this aspect, even when the pressure of the inflow fluid momentarily varies, the variation can be buffered to minimize the variation of the flow rate of the fluid.

### Brief Description of the Drawings

The above objects and other advantages of the present invention will become more apparent by describing in detail preferred embodiments thereof with reference to the attached drawings in which:

FIG. 1 is an exploded perspective view of a pressure valve according to an embodiment of the present invention;

FIG. 2 is a sectional view of a pressure valve depicted in FIG. 1, when it is assembly;

FIG. 3 is a perspective view of a movable unit depicted in FIG. 1; and

FIG. 4A and 4B are views illustrating an operation of a pressure valve depicted in FIGs. 1 and 2.

### Detailed Description of the preferred Embodiment

Now, preferred embodiments of the present invention will be described in detail with reference to the accompanying drawings.

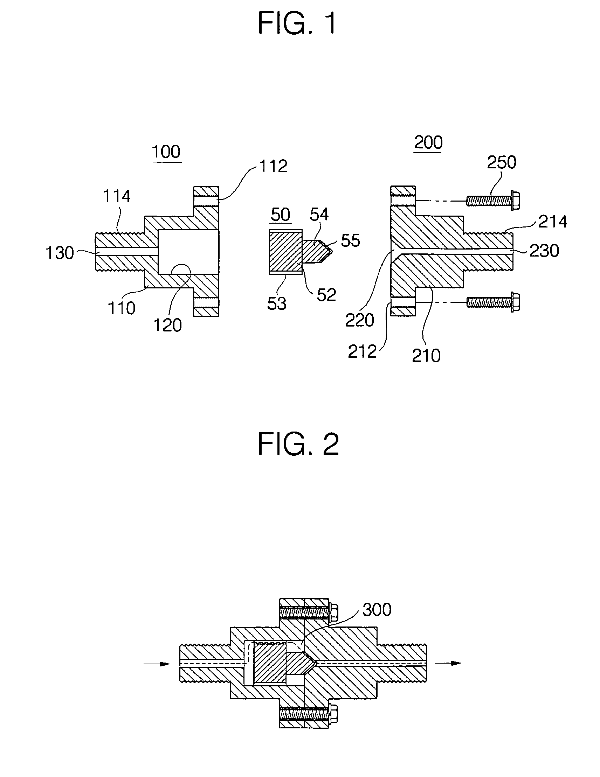

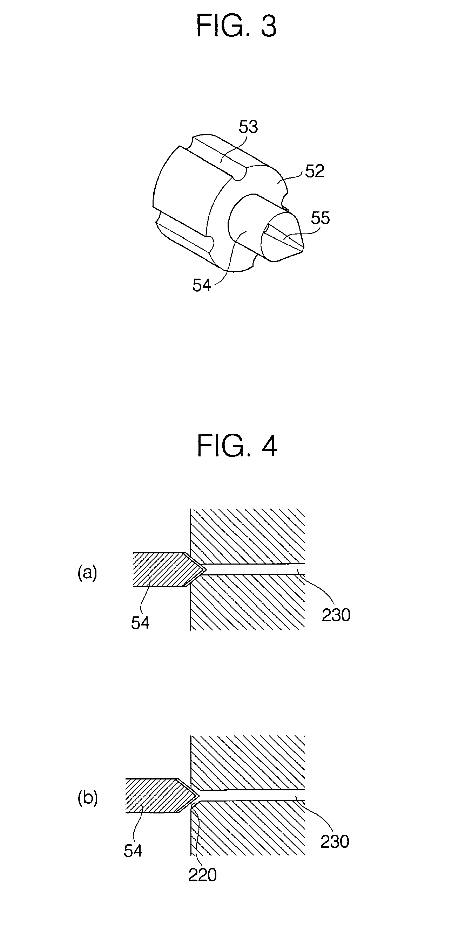

FIG. 1 is an exploded perspective view of a pressure valve according to an embodiment of the present invention, FIG. 2 is a sectional view of a pressure valve depicted in FIG. 1, when it is assembly, FIG. 3 is a perspective view of a movable unit depicted in FIG. 1.

Referring first to FIGs. 1 and 2, first and second casings 100 and 200 that are identical in a structure to each other are separably coupled to each other by inserting bolts 250 in bolt holes 112 and 212 in a state where they face and contact each other. In order to enhance a sealing force between the first and second casings 100 and 200, a gasket or the like may be interposed between the first and second casings 100 and 200 during the coupling process. Instead of using the bolts 250, the first and second casings 110 and 130 may be coupled to each other through a thermal bonding process or by adhesive.

Preferably, the first and second casings 100 and 200 may be formed of iron metal or non-iron metal that is less deformed against heat and pressure. In addition, threads 114 and 214 may be formed on outer end portions of the first and second casings 100 and 200 so that other components can be thread-coupled to the outer end portions of the first and second casings 100 and 200.

The first casing 100 includes a single body 110 through a center of which a fluid inflow passage 130 and a receiving passage 120 that communicate with each other are formed. A flange is formed on an outer circumference of a receiving passage forming portion of the body 110 and the bolt holes 112 are formed on the flange.

Since the receiving passage 120 receives a movable unit that will be described later, a diameter thereof is larger than that of the fluid inflow passage 130.

The second casing 200 includes a single body 210 through a center of which a fluid inflow passage 230 and a receiving portion that communicate with each other are formed. A flange is formed on an outer circumference of a receiving portion forming portion of the body 210 and the bolt holes 212 are formed on the flange.

The receiving portion 220 is formed in a funnel shape to receive a head of a movable unit that will be described later.

Referring to FIG. 3, the movable unit 50 includes a body 52 and a head 54 integrally extending from the body 52. An extreme end of the head 54 is tapered. i.e., formed in a cone-shape. First grooves 53 are formed on an outer circumference of the body 52 and spaced apart from each other. A second groove 55 is formed on the tapered portion of the head 54. In the drawing, the first and second grooves 54 and 55 having a semi-circular section, the present invention is not limited to this case. That is, the first and second grooves 54 and 55 may have a semi-oval section, a circular section, an oval section, or a polygonal section.

The fluid that can be applied to the present invention may be selected from the group consisting of pure water, liquid mixture, viscous liquid, gas, and a mixture thereof.

The above described components can be assembled as shown in FIG. 2 and the fluid flows along a path indicated by a dotted line. That is, the fluid flows along a path (the fluid inflow passage 130 → the receiving passage 120 → the first groove 53 → a buffer space 300 → the second groove 55 → the fluid outflow passage 230).

Here, the buffer space 300 is a space where the inflow fluid stays until it is discharged. When fluid pressure of the buffer space increases, the pressure is transmitted to the movable unit 50 to move the movable unit 50.

The operation of the above-described pressure valve will be now described with reference to FIGs. 4A and 4B.

According to the present invention, a gap between the movable unit 50 and the receiving portion 220 uniformly varies according to a pressure variation of the inflow fluid so that the flow rate of the fluid discharged through the fluid outflow passage 230 of the second casing 200 can uniformly vary.

When the fluid is supplied to the fluid inflow passage 130 of the first casing 100, the body 52 of the movable unit 50 is biased toward the second casing 200 by the fluid such that the tapered end portion of the head 54 of the movable unit 50 is received in the receiving portion 220 of the second casing 200.

At this point, as shown in FIG. 4A, the tapered end portion of the head 54 of the movable unit 50 is not fully received to expose a portion of the second groove 55 formed on the tapered end portion.

In this state, the inflow fluid flows to the buffer space 300 enclosed by the second casing 200 and the movable unit 50 along the first grooves 53 formed on the outer circumference of the movable unit 50 and is accumulated in the buffer space 300.

The accumulated fluid flows to the fluid outflow passage 230 through the second groove 55 formed on the tapered end portion of the head 54 of the movable unit 50.

That is, in the above-described initial state, since the tapered end portion of the head 54 except for the second groove 55 is received in the receiving portion 220, the second groove 55 functions as a main fluid passage.

In this initial state, when the pressure of the inflow fluid increases, the pressure applied to the body 52 of the movable unit 50 and fluid pressure in the buffer space 300 also increase.

When the pressure of the inflow fluid further increases, the fluid pressure in the buffer space 300 becomes greater than the pressure applied to the body 52 of the movable unit 50 by the inflow fluid, thereby moving the movable unit 50. That is, as shown in FIG. 4B, by the movement of the movable unit 50, a gap between the tapered end portion of the head 54 of the movable unit 50 and the receiving portion 220 of the second casing 200 increases.

Therefore, the flow rate per hour through the fluid outflow passage 230 increases.

When the fluid pressure of the buffer space 300 becomes identical to the pressure applied to the body 52 of the movable unit 50 by the inflow fluid, the movement of the movable unit 50 stops to maintain the current flow rate of the fluid.

As described above, even when the pressure of the inflow fluid momentarily varies, the steep variation is buffered by the buffer space 300, thereby preventing the flow rate of the outflow fluid from momentarily varying.

The pressure valve of the present invention may be applied to an engine oil circulation system or a blood supply system for uniformly supplying the blood in response to the blood pressure. The pressure valve may be further applied to a system for uniformly adjusting an amount of the discharge water at a place such as a dam where a variation of a water level is high. The pressure vale may be further applied to adjust sound pressure of a place where noise and vibration are high.

According to the present invention, the pressure valve has a simple structure and uniformly varies the flow rate of the outflow fluid in response to the pressure of the inflow fluid.

Furthermore, even when the pressure of the inflow fluid momentarily varies, the variation can be buffered to minimize the variation of the flow rate of the fluid.

While the present invention has been described in detail, it should be understood that various changes, substitutions and alterations can be made hereto without departing from the spirit and scope of the invention as defined by the appended claims.

For example, although the sections of the receiving passage, the receiving portion, and the movable unit are a circular shape in the above description, the present invention is not limited to this. For example, the sections may be an oval shape, a polygonal shape, or a combination of the oval shape and the polygonal shape. Particularly, when the receiving portion of the second casing is formed in a rectangular-cone shape, the end portion of the head of the movable unit is formed in a hexagonal-cone shape. In this case, there is no need to form the second groove on the end portion of the head.

## Claims

1. A pressure valve comprising:
first and second casings separably coupled to each other, first and second casings respectively having a fluid inflow passage and a fluid outflow fluid passage communicating with each other; and
a movable unit inserted in the fluid inflow passage, the movable unit being movable by pressure of inflow fluid and allowing fluid to flow between the movable unit and the fluid inflow passage,
wherein a start portion of the fluid outflow passage of the second casing is provided with a receiving portion for receiving an end portion of the movable unit, a gap being formed between the end portion of the movable unit and the receiving portion.

2. The pressure valve of claim 1, wherein the movable unit comprises:
a main body on an outer circumference of which a plurality of first grooves are formed in a direction where the fluid flows; and
a head extending from the main body, the head having an tapered end portion and having a smaller diameter the a diameter of the main body,
wherein the tapered end portion is provided with a second groove formed in the direction where the fluid flows.

3. The pressure valve of claim 1 or 2, wherein the first and second casings are formed of iron metal or non-iron metal that is less deformed against heat and pressure and the movable unit is formed of polymer material or ceramic material that is superior in heat-resistance, pressure-resistance, frictional-heat-resistance.

4. A pressure valve comprising:
a first casing having a fluid inflow passage and a receiving passage communicating with the fluid inflow passage and having a diameter greater than that of the fluid inflow passage;
a second casing coupled to the first casing, the second casing having a receiving portion communicating with the receiving passage and a fluid outflow passage communicating with the receiving portion; and
a movable unit having a main body on an outer circumference of which at least one groove is formed in a direction where the fluid flows and a head extending from the main body, the head having an tapered end portion and having a smaller diameter that a diameter of the main body,
wherein the main body is movably inserted in the receiving passage and the tapered end portion is received in the receiving portion, thereby forming a buffer space enclosed by the movable unit and the first and second casings.

## Amended claims

### Amended claims in accordance with Rule 86(2) EPC.

**1.** A pressure valve for controlling a flow according to pressure of inflow fluid comprising:
a first casing (100) having a fluid inflow passage (130) and a receiving passage (120) communicating with the fluid inflow passage (130) and having a diameter greater than that of the fluid inflow passage (130);
a second casing (200) coupled to the first casing (100), the second casing (200) having a receiving portion (220) communicating with the receiving passage (120) and a fluid outflow passage (230) communicating with the receiving portion (220);
a movable unit (50) having a main body (52) on an outer circumference of which at least a first groove (53) is formed in a direction where the fluid flows and a head (54) extending from the main body (52), the head (54) having an tapered end portion and having a smaller diameter than a diameter of the main body (52), and at least a second groove (55) being formed in a direction where the fluid flows; and
a buffer space (300) enclosed by the the movable unit (50) and the first and second casings (100, 200), **characterized in that**
when a pressure of the fluid flown into the fluid inflow passage (130) is increased, fluid in the buffer space (300) presses the movable unit (50) to be moved in a direction opposite to the fluid flow direction so that a gap between the tapered end portion of the head (54) and the receiving portion (220) is widened.

**2.** The pressure valve of claim 1, wherein the first and second casings (100, 200) are formed of iron metal or non-iron metal that is less deformed against heat and pressure and the movable unit (50) is formed of polymer material or ceramic material that is superior in heat-resistance, pressure-resistance, frictional-heat-resistance.
